Europäisches Patentamt

European Patent Office

Office européen des brevets

(11) Numéro de publication: **0 267 342**
**A1**

## (12) DEMANDE DE BREVET EUROPEEN

(21) Numéro de dépôt: 86402503.6

(22) Date de dépôt: **12.11.86**

(51) Int. Cl.⁴: **H01M 2/16**

(43) Date de publication de la demande:
**18.05.88 Bulletin 88/20**

(84) Etats contractants désignés:
**AT BE CH DE ES FR GB IT LI LU NL SE**

(71) Demandeur: **INNOLAB**
**21, Avenue Victor Hugo**
**F-75116 Paris(FR)**

(72) Inventeur: **Berger, Michel**
**104, La Lande Sainte-Hélène**
**F-33480 Castelnau-de-Médoc(FR)**

(74) Mandataire: **Combe, André et al**
**CABINET BEAU DE LOMENIE 55, rue**
**d'Amsterdam**
**F-75008 Paris(FR)**

(54) **Séparateurs céramiques pour batteries d'accumulateurs électriques.**

(57) La présente invention concerne des séparateurs (4) pour batteries d'accumulateurs électriques, caractérisés en ce qu'ils sont constitués ou comportent une proportion notable de silicate de zirconium.

Fig.1

EP 0 267 342 A1

## Séparateurs céramiques pour batteries d'accumulateurs électriques.

La présente invention concerne de nouveaux séparateurs céramiques pour batteries d'accumulateurs électriques; elle concerne également les batteries utilisant lesdits séparateurs.

Les séparateurs utilisés dans les batteries électriques ont pour fonction de séparer les compartiments anodique et cathodique desdites batteries; mais une telle séparation ne doit pas être étanche car, si le séparateur doit laisser les ions OH dans les deux sens, il doit simultanément, sans se colmater, arrêter les ions susceptibles de provoquer une dégradation des électrodes de l'un et l'autre des compartiments.

Il est assez difficile de trouver un séparateur convenable rassemblant les diverses propriétés, parfois contradictoires, qu'il doit présenter; on utilise en général dans les accumulateurs électriques modernes des membranes en un polymère organique comme le Nylon ou le polypropylène.

La présente invention concerne un nouveau séparateur, caractérisé en ce qu'il est ou en ce qu'il comporte du silicate de zirconium ($SiO_2$ $ZrO_2$) ou zircon.

Les nouveaux séparateurs selon l'invention sont applicables à la fois dans les batteries d'accumulateur dites acides et dans les batteries dites alcalines; la tenue mécanique du zircon lui-même est suffisante dans une très large gamme de pH et de températures, et si le séparateur comporte d'autres éléments de constitution , il serait souhaitable d'adapter le choix de ces autres éléments aux accumulateurs dans lesquels ils doivent être utilisés. Le séparateur en zircon peut être réalisé de différentes façons. On peut tout d'abord utiliser le zircon sous la forme d'une plaque ou d'une feuille mince; un tel séparateur aura l'avantage notamment d'être aisément déformable, lorsque le volume de l'un ou l'autre des compartiments (anodique ou cathodique) varie. Pour réaliser un séparateur de ce type, on utilise par exemple des feuilles de papier céramique zircon ou contenant des proportions importantes (au moins environ 50% en poids) de zircon, (les autres constituants étant essentiellement de l'alumine et/ou de la silice); la structure d'un tel papier est constituée généralement de fibres de matière plastique (polypropylène, Nylon...) et le zircon constitue la charge dudit papier.

On peut également utiliser le zircon sous la forme d'un enduit céramique plus ou moins épais qui sera convenablement mis en forme puis durci. On pourra réaliser ainsi des séparateurs ayant une structure rigide et cette structure pourra être utilisée pour le positionnement des électrodes. Dans ce cas on réalise aisément des séparateurs formant des conteneurs rigides dans lesquels on intègre l'électrolyte et les électrodes.

Bien évidemment on peut utiliser simultanément le séparateur mince (type papier) et le séparateur rigide,mais on peut également combiner l'un ou l'autre de ces types de séparateurs zircon avec des séparateurs classiques souples par exemple.

Dans ce qui suit on décrira l'utilisation de l'invention dans le domaine des accumulateurs alcalins et plus particulièrement de ceux présentant une anode en zinc et une cathode en oxyde de nickel; il est évident cependant que ces exemples ne sont nullement limitatifs; en effet les séparateurs peuvent être indifféremment placés autour de l'anode, autour de la cathode ou simplement entre les compartiments anodiques et cathodiques et les anodes et cathodes peuvent être constituées non seulement par des feutres conducteurs mais par des métaux déployés des supports frittés ou équivalents.

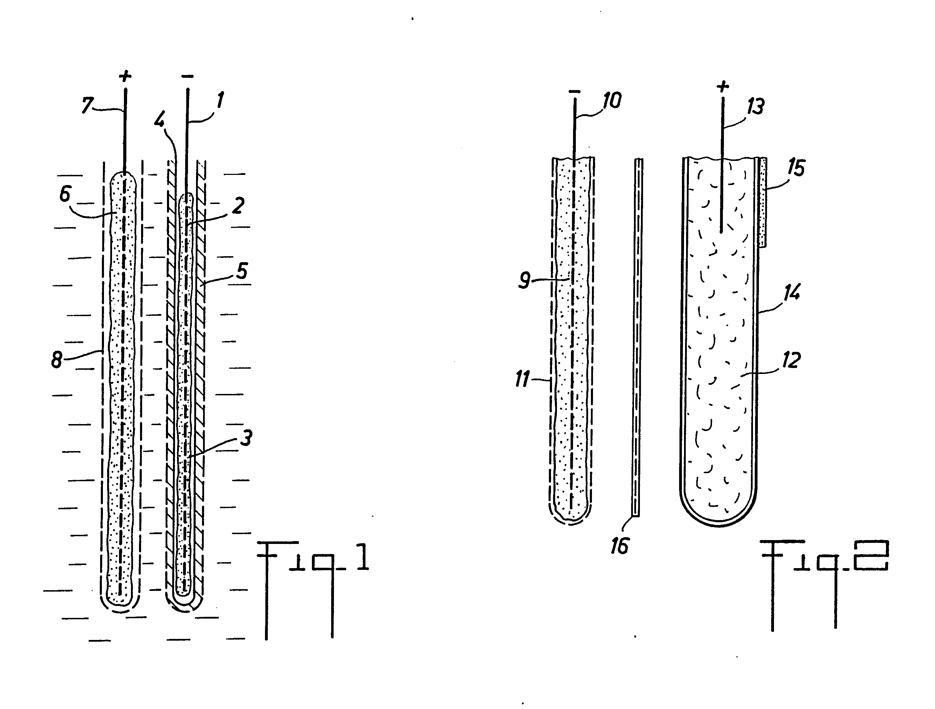

Les applications de l'invention sont illustrées sur les figures 1 et 2;

la figure 1 représente, en coupe transversale, un élément d'une batterie Zi-NiO et la figure 2 un élément d'une batterie analogue mais dans lequel le séparateur est disposé autrement.

Sur la figure 1 on a représenté :

-en 1 le collecteur négatif qui est constitué par exemple d'une grille plongeante collectrice en acier inoxydable

-en 2 on a disposé un feutre en polyamide métallisé recouvert de zinc par électrolyse ; ce feutre présente une très grande surface d'échange ionique.

-dans ledit feutre on a introduit 3 l'électrolyte liquide; il est possible de disposer dans ledit feutre une poudre de silice avant d'y mettre l'électrolyte et il est souhaitable que cet électrolyte soit saturé en ZrO.

-l'électrode ainsi réalisée est entourée en 4 du séparateur selon l'invention qui est constitué par environ 3 couches superposées d'un papier zircon qui est lui-même constitué de fibres de polypropylène et d'une charge en zircon (cette charge représente 30 à 70% en poids du papier).

-autour de ce papier (qui présente une certaine souplesse) on a disposé 5 un enduit céramique en silicate de zirconium ($SiO_2$ $ZrO_2$) qui a été cuit à 160°C et s'est solidifié en formant une carapace rigide.

-la cathode est formée de feutre métallique 6 dans lequel le courant positif est drainé par le collecteur 7. Ce feutre métallique est enduit d'hydroxyde de nickel (matière électro-positive) et l'ensemble de cette cathode est entouré d'un tissu ou d'un séparateur genre fibre polyamide comprimée (à titre d'exemple, dénomination commerciale "pelon") en 8.

Fonctionnement : Lors des différentes réactions charge-décharge d'un tel couple plongé dans un milieu alcalin, les ions OH passent de l'anode à la cathode pour la décharge de la cathode à l'anode pour la charge en libérant pendant cette opération des atomes d'hydrogène. Ici, cet ensemble céramique a 3 fonctions :

1°) - La couche extérieure 5 sert de membrane qui empêche toute migration des particules métalliques dans l'électrolyte.

2°) - Le papier céramique qui, lui, est compressible, permet, tout en servant de séparateur, d'admettre les variations de volume de l'anode fibreuse pendant les réactions d'oxydo-réduction.

3°) - La silice (à titre d'exemple) qui remplit l'espace intérieur du feutre fixe mécaniquement le zinc et l'empêche, lors des échanges multiples charge-décharge, de tomber par gravité dans la partie inférieure (effet poire bien connu dans les anodes en zinc) et ainsi prolonge la vie de la batterie en augmentant le nombre de cycles. A titre d'exemple, une telle batterie expérimentée en cycle continu en charge-décharge à C/5 a permis d'obtenir 350 cycles sans aucune détérioration. De plus, l'autodécharge d'un tel couple ainsi monté est très faible sans pour cela nuire à la résistance interne.

Sur la figure 2 on a représenté :

-l'anode toujours constituée d'un feutre recouvert de matière active négative en 9 dont le collecteur de courant se trouve en 10 est ici simplement recouverte d'un simple séparateur organique en 11 du type pelon comme déjà décrit.

-la cathode constituée d'un feutre métallique 12 et du collecteur 13, feutre recouvert d'hydroxyde de nickel positif, est remplie dans les espaces vides du feutre de céramique poreuse permettant à l'électrolyte de circuler. Cette céramique intérieure a une structure telle (ceci dépend du liant employé) qu'elle peut supporter la variation de volume de la cathode lors du travail d'oxydo-réduction. Elle est entourée en 14 d'un papier céramique du type zircon qui n'entrave pas les variations de volume. Elle peut éventuellement, comme dans le cas de la figure 1, être recouverte d'une céramique plus dure SiO₂ZrO₂ ou autre céramique résistant aux alcalins en 15. Dans le cas où l'on ne voudrait pas faire ce dépôt de céramique supplémentaire sur la cathode, il serait nécessaire de prévoir en 16 une membrane type membrane organique de haute tenue aux alcalins pour empêcher toute migration éventuelle des particules de zinc vers la cathode.

Fonctionnement : Celui-ci est à peu près le même que celui étudié dans l'exemple précédent sauf que, dans ce cas, il peut y avoir du zinc en solution ou en suspension dans l'électrolyte et que sa migration vers la cathode lui est interdite par les céramiques qui recouvrent cette dernière alors que, dans le cas précédent, cette migration était bloquée sur l'anode représentée figure 1.

Avantages : Les avantages d'une telle technologie sont les suivants :

1°) - Une mise en oeuvre assez facile pour fabriquer en série.

2°) - Un prix de revient de cet ensemble séparateur-membrane en céramique relativement bon marché.

3°) - Résistance interne assez faible, la céramique étant très poreuse aux ions OH.

4°) - Blocage mécanique particulièrement dans le premier cas fig. 1 et 2 du zinc empêchant la migration de de celui-ci et sa reconstitution lors de la charge uniquement dans la partie basse de l'anode (effet poire).

5°) - L'effet de dendrites déjà très diminué par la grande surface d'échange ionique est bloqué par cet ensemble à base de silice qui empêche la formation de pointes (dendrites).

Un tel montage permet, dans le cas d'un travail électrique à intensité moyenne, d'obtenir une batterie étanche car le dégagement d'hydrogène particulièrement lors de la recharge est fixé par effet catalytique par le zirconium dont c'est l'une des propriétés, cette propriété étant plus efficace en milieu alcalin qu'acide. On a avantage dans un tel montage à employer de l'électrolyte qui soit saturé en oxyde de métal négatif et particulièrement quand celui-ci est soluble dans ce dit électrolyte. C'est particulièrement le cas pour le zinc, ce qui ferait employer le montage figure 1 pour ce type de batterie mais ce n'est pas le cas, par exemple, pour le cadmium, ce qui ferait désigner le montage figure 2 dans ce type de couple.

**Revendications**

1. Séparateurs pour batteries d'accumulateurs électriques, caractérisés en ce qu'ils sont constitués ou comportent une proportion notable de silicate de zirconium.

2. Séparateur selon la revendication 1, caractérisé en ce qu'il est réalisé à l'aide de feuilles d'un papier contenant du silicate de zirconium.

3. Séparateur selon l'une des revendications 1 et 2, caractérisé en ce qu'il est constitué d'un enduit cuit rigide formé de ou contenant du silicate de zirconium.

4. Batteries d'accumulateurs électriques comportant au moins un séparateur selon l'invention.

Fig.1

Fig.2

0 267 342

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | US-A-3 379 569 (C. BERGER et al.) <br> * Revendications 3,4; colonne 4, lignes 32-36; colonne 2, lignes 24-31 * | 1,3,4 | H 01 M 2/16 |
| Y | | 2 | |
| | --- | | |
| Y | US-A-4 331 746 (D.W. SHEIBLEY) <br> * Revendications 1,4,10 * | 2 | |
| | --- | | |
| Y | US-A-3 703 417 (A.G. ROSA et al.) <br> * Revendications 1,3,4; colonne 4, lignes 33-53 * | 2 | |
| | --- | | DOMAINES TECHNIQUES RECHERCHES (Int. Cl.4) |
| A | FR-A-2 209 608 (ASAHI KASEI KOGYO K.K.) <br> * Revendication 1 * | 1 | H 01 M |
| | --- | | |
| A | EP-A-0 060 560 (HITACHI LTD.) <br> * Revendications 1,6 * | 1 | |
| | --- | | |
| A | US-A-4 133 941 (D.W. SHEIBLEY) <br> * Revendications 15,16 * | 1 | |
| | --- -/- | | |

Le présent rapport de recherche a été établi pour toutes les revendications

| Lieu de la recherche <br> LA HAYE | Date d'achèvement de la recherche <br> 13-02-1987 | Examinateur <br> D'HONDT J.W. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82

## DOCUMENTS CONSIDERES COMME PERTINENTS

Page   2

| Catégorie | Citation du document avec indication, en cas de besoin, des parties pertinentes | Revendication concernée | CLASSEMENT DE LA DEMANDE (Int. Cl.4) |
|---|---|---|---|
| A | CHEMICAL ABSTRACTS, vol. 100, no. 8, 20 février 1984, page 179, résumé no. 54607e, Columbus, Ohio, US; & US-A-463 440 (UNITED STATES NATIONAL AERONAUTICS AND SPACE ADMINISTRATION) 25-11-1983 * Résumé * | 1 | |

-----

DOMAINES TECHNIQUES
RECHERCHES (Int. Cl.4)

Le présent rapport de recherche a été établi pour toutes les revendications

| Lieu de la recherche | Date d'achèvement de la recherche | Examinateur |
|---|---|---|
| LA HAYE | 13-02-1987 | D'HONDT J.W. |